# EUROPEAN PATENT SPECIFICATION

(11) **EP 2 508 957 B1**
(45) Date of publication and mention of the grant of the patent: **24.02.2016**
(21) Application number: 12161785.6
(22) Date of filing: 28.03.2012
(51) Int. Cl.: G05D 1/02, G05D 1/00

(54) **Robot cleaner, remote controlling system and method of the same**
Reinigungsroboter, Fernbedienungssystem und Verfahren dafür
Robot nettoyeur, système de commande à distance et procédé correspondant

(30) Priority: 07.04.2011 KR 20110032346
(43) Date of publication of application: 10.10.2012
(73) Proprietor: LG Electronics Inc., Seoul 150-721 (KR)
(72) Inventor: Kim, Yiebin, 641-711 Changwon (KR)
(74) Representative: Vossius & Partner Patentanwälte Rechtsanwälte mbB

(56) References cited:
- DE-B3-102007 010 979
- KR-A- 20100 109 289
- US-A1- 2007 209 143

## Description

The present disclosure relates to a robot cleaner capable of creating a contaminant degree map, and remote controlling system and method for controlling a robot cleaner based on a contaminant degree map.

Generally, a robot has been developed for an industrial use, and has managed some parts of factory automation. As the robot is applied to various fields recently, medical robots, space robots, home robots, etc. are being developed.

A representative of the home robot is a robot cleaner, a kind of home electronic appliance capable of performing a cleaning operation by sucking peripheral dust or foreign materials with autonomously moving on a predetermined region. This robot cleaner is provided with a chargeable battery, and is provided with an obstacle sensor for avoiding an obstacle while moving. Recently, being developed are robot cleaners capable of recognizing positions thereof and creating maps by using cameras and sensors.

DE 10 2007 010 979 B3 discloses a method for controlling a driving direction of a robot cleaner based on a position-dependent condition parameter of a floor space, which is detected with a sensor device. During cleaning of the floor space, a degree of pollution of the floor space is recorded as the condition parameter, and emerging dirt is also detected and stored. The control unit controls processing intensity of the area in a flowing processing cycle based on the degree of pollution.

US 2007/209143 A1 discloses a robot vacuum cleaner having a microbe sensing function, by including: a microbe contamination sensor which detects a microbe contamination in the area to be cleaned; and a sterilizing unit which sterilizes a corresponding portion according to a microbe contamination measuring signal generated from the microbe contamination sensor.

Therefore, an aspect of the detailed description is to provide a robot cleaner capable of creating a contaminant degree map by detecting contamination materials (contaminants) included in the air or on the bottom of a region to be cleaned (cleaning region).

Another aspect of the detailed description is to provide a robot cleaner capable of creating a cleaning map by searching for a region to be cleaned and capable of creating a contaminant degree map by detecting a contaminant degree at the periphery thereof, and remote controlling system and method for remote controlling a robot cleaner based on the contaminant degree map.

To achieve these and other advantages and in accordance with the purpose of this specification, as embodied and broadly described herein, there is provided a remote controlling system of a robot cleaner, the system comprising: a robot cleaner configured to create a cleaning map with respect to a cleaning region to be cleaned by searching for the cleaning region, and configured to create a contaminant degree map from the cleaning map by detecting a contaminant degree of the cleaning region; and a terminal device configured to control the robot cleaner by receiving the contaminant degree map from the robot cleaner, and by generating a control command with respect to the robot cleaner.

The robot cleaner may include a contaminant degree detection unit configured to detect a contaminant degree of a region to be cleaned; and a controller configured to create a cleaning map by searching for the cleaning region, and configured to create a contaminant degree map from the cleaning map based on the contaminant degree. The robot cleaner may further include a communication unit configured to transmit the contaminant degree map to an external device.

The terminal device may include a control module configured to create the control command by executing a remote control program; a communication module configured to receive the contaminant degree map from the robot cleaner, and to transmit the control command to the robot cleaner; and a user interface module configured to display the contaminant degree map, and to receive the control command.

To achieve these and other advantages and in accordance with the purpose of this specification, as embodied and broadly described herein, there is also provided a remote controlling method of a robot cleaner, the method comprising: creating a cleaning map with respect to a region to be cleaned by a robot cleaner; detecting a contamination degree of the cleaning region by the robot cleaner; creating a contaminant degree map from the cleaning map based on the contaminant degree by the robot cleaner; and transmitting the contaminant degree map to the terminal device by the robot cleaner.

In the present disclosure, the cleaning map may be created by searching for a region to be cleaned (cleaning region), and the contaminant degree map may be created by detecting a contaminant degree according to each position within the cleaning region. This may allow a cleaning schedule and a contamination prevention schedule to be easily established based on the cleaning map and the contaminant degree map.

In the present disclosure, contamination materials, the contaminant degree, etc. may be analyzed to be stored according to each position of a region to be cleaned. This may allow a cleaning operation to be performed in more details, resulting in enhancing cleaning efficiency.

In the present disclosure, dust, harmful materials, harmful gas, virus, radioactive materials, etc. included in the air, on the bottom, etc. of a region to be cleaned may be detected for removable. This may allow a user to be protected from each type of colorless and odorless contamination materials.

In the present disclosure, the cleaning map and the contaminant degree map with respect to the cleaning region may be received at a remote place, through the terminal device. This may allow information on the cleaning region, such as a cleaning state and a contamination state, to be easily checked. Furthermore, a user may control the robot cleaner to perform a cleaning operation, contaminant removal, etc. with respect to the cleaning region, at a remote place, by using the terminal device. This may enhance cleaning efficiency and a user's convenience.

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a perspective view showing the appearance of a robot cleaner according to one embodiment of the present disclosure;
FIG. 2 is a schematic view showing a configuration of a remote controlling system of a robot cleaner according to one embodiment of the present disclosure;
FIG. 3 is a block diagram schematically showing a configuration of a robot cleaner according to one embodiment of the present disclosure;
FIG. 4 is a block diagram showing one example of a terminal device of FIG. 2;
FIG. 5 is a block diagram schematically showing a configuration of a robot cleaner according to another embodiment of the present disclosure;
FIG. 6 is a view for explaining an operation to display a cleaning map by a terminal device according to the present disclosure;
FIG. 7 is a view for explaining an operation to display a contaminant degree map by a terminal device according to the present disclosure; and
FIG. 8 is a view schematically showing a remote controlling method of a robot cleaner according to the present disclosure.

Description will now be given in detail of the exemplary embodiments, with reference to the accompanying drawings. For the sake of brief description with reference to the drawings, the same or equivalent components will be provided with the same reference numbers, and description thereof will not be repeated.

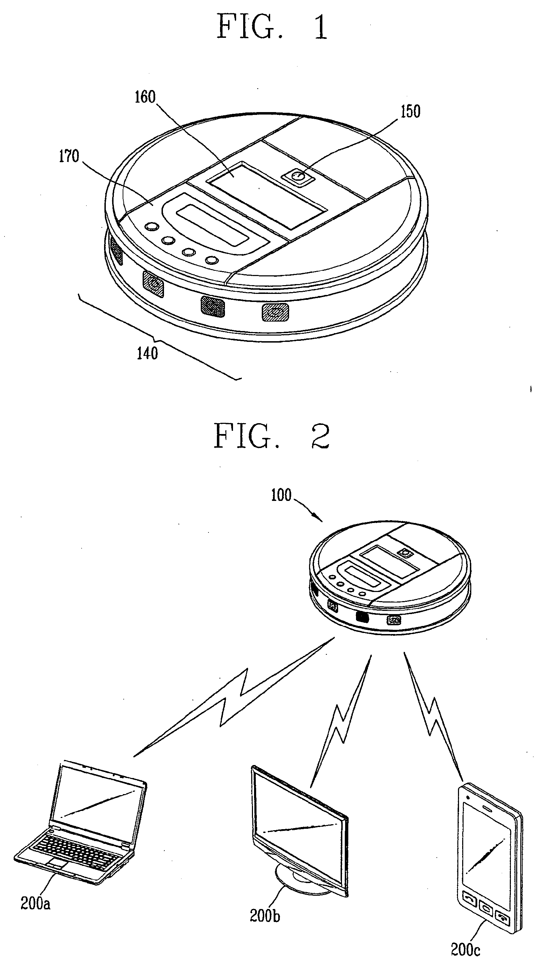

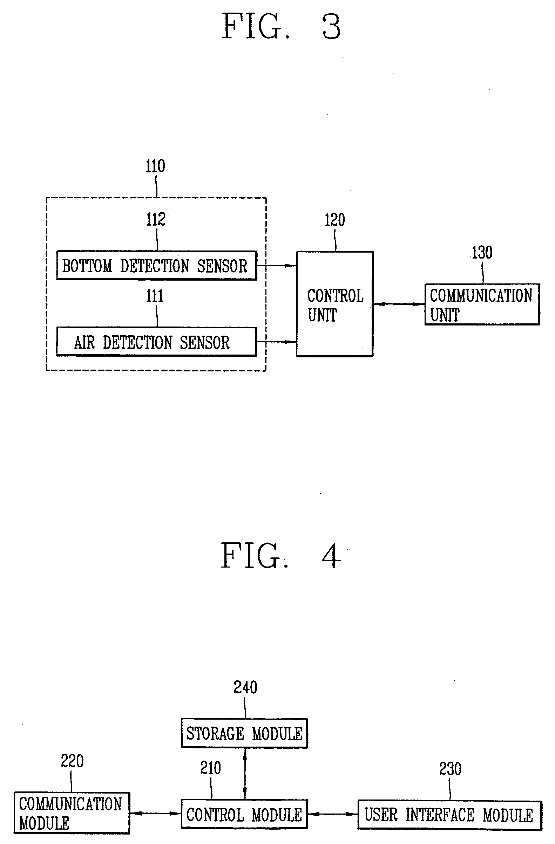

Referring to FIGS. 1 and 3, a robot cleaner according to one embodiment of the present disclosure comprises a contaminant degree detection unit detection unit 110 and a controller 120. The contaminant degree detection unit 110 is configured to detect the degree of contamination (contaminant degree) of a region to be cleaned (cleaning region). And, the controller 120 is configured to create a cleaning map by searching for the cleaning region, and configured to create a contaminant degree map from the cleaning map based on the contamination degree.

Referring to FIG. 3, the contaminant degree detection unit 110 includes an air detection sensor 111 configured to detect dust or specific materials included in the air at the periphery of the cleaning region. The air detection sensor 111 serves to detect specific materials contained in the air in a suction or diffusion manner. The air detection sensor is implemented as a gas sensor, such as a CO₂ sensor for detecting carbon dioxide, and an S sensor for detecting sulfur. The air detection sensor may be configured to detect yellow dust containing a heavy metal included in the air, such as iron, aluminum, cadmium and lead, and to calculate a concentration thereof. The air detection sensor may be implemented as a dust sensor for detecting dust, particles, pollen, mites, virus, etc. The air detection sensor may be configured to detect each type of colorless and odorless contaminants (contamination materials), e.g., radioactive elements such as iodine, cesium and plutonium, and harmful gas such as carbon monoxide, ammonia, formaldehyde and volatile organic compounds.

The contaminant degree detection unit 110 may include a bottom detection sensor 112 configured to detect dust or specific materials on the bottom of the cleaning region. The bottom detection sensor 112 is configured to suck dust or foreign materials disposed on the bottom (to perform a cleaning operation), and then to detect materials included in dust or foreign materials. Alternatively, the bottom detection sensor may detect materials included in dust or foreign materials by transmitting a signal to the dust or foreign materials. The bottom detection sensor may be implemented as an infrared ray sensor, an ultrasonic wave sensor, a dust sensor, an electrode sensor, etc. Still alternatively, the bottom detection sensor may be configured to detect each type of colorless and odorless contaminants, e.g., specific materials, dust, harmful gas, etc., in the same manner as the air detection sensor.

The controller 120 is configured to create a cleaning map in a wall surface search manner, in a cell division manner, etc., by searching a region to be cleaned, i.e., with running or performing a cleaning operation. Here, explanations about a detail algorism for creating a cleaning map will be omitted. As explained later, when creating a cleaning map, the controller 120 may use a position, a size, etc. of an obstacle or a structure inside a cleaning region. The controller may refer to a position of the robot cleaner, etc., or may use a substantial map. The cleaning map may include position information. The controller 120 is configured to create a contaminant degree map by corresponding a contaminant degree detected by the contaminant degree detection unit 110 to a position on the cleaning map. The controller 120 may compare the contaminant degree with a preset reference value, and generate an alarm signal according to a comparison result. For instance, the robot cleaner presets a reference contaminant degree with respect to a specific contaminant such as formaldehyde. Then, the controller compares a contaminant degree detected by the contaminant degree detection unit 110 with the reference contaminant degree. If the contaminant degree detected by the contaminant degree detection unit 110 is more than the reference contaminant degree, the controller 120 may transmit an alarm message to a user.

Referring to FIG. 3, the robot cleaner may further comprise a communication unit 130 configured to transmit the contaminant degree map to an external device. The communication unit 130 may be connected to the external device in one of a wired manner, a wireless manner, and a satellite communication manner. The communication unit 130 may perform a short-range communication by using one of a radio frequency (RF) communication, Bluetooth, an infrared ray communication, a wireless LAN and zigbee. The communication unit 130 may transmit a cleaning map, state information, etc. to the external device.

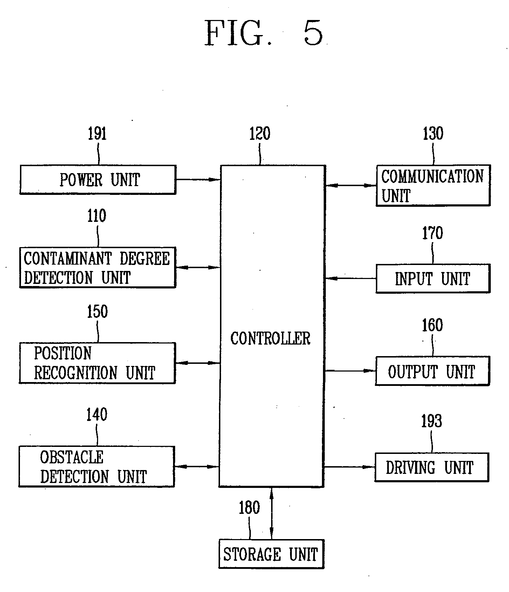

Referring to FIG. 5, a robot cleaner according to another embodiment of the present disclosure comprises a contaminant degree detection unit 110, a controller 120, a communication unit 130, and an obstacle detection unit 140 configured to detect an obstacle on the cleaning region. The robot cleaner further comprises a position recognition unit 150 having one or more sensors, and configured to recognize the position of the robot cleaner.

The obstacle detection unit 140 is configured to detect an obstacle at the periphery of the robot cleaner while moving within the cleaning region, or while performing a cleaning operation. The obstacle detection unit 140 outputs, to the controller 120, information on the position and the size of the obstacle, and information whether the obstacle exists or not, etc. As the obstacle detection unit 140, may be used an infrared ray sensor, an ultrasonic wave sensor, a radio frequency (RF) sensor, a bumper, etc. The controller 120 may create a cleaning map based on information on the obstacle detected by the obstacle detection unit 140.

The position recognition 150 is configured to recognize the current position of the robot cleaner within a cleaning region. As the position recognition 150, may be used a sensor such as an acceleration sensor, an encoder, a gyro sensor and a laser sensor. The acceleration sensor is configured to recognize each speed and each position of the robot cleaner which is moving. The encoder is connected to a wheel motor for driving wheels of the robot cleaner, thereby detecting the speed of the robot cleaner. The gyro sensor is configured to detect a rotation speed of the robot cleaner. As shown in FIG. 1, as the position recognition unit 150, may be used a camera installed to face the upper side and the front side and configured to capture the periphery of the robot cleaner. When the robot cleaner is provided with a plurality of cameras, the cameras may be installed on an upper surface or a side surface of the robot cleaner with a constant distance therebetween or with a constant angle. The robot cleaner may further comprise a lens connected to the camera and focusing the camera on a subject, a camera controller, and a lens controller. The robot cleaner may acquire image information from the camera. As the lens, preferably used is a lens having a wide view angle so that all the peripheral regions, e.g., all the regions on the ceiling may be captured at a predetermined position. For instance, the lens is implemented as a lens having a view angle more than a predetermined angle, 160°. The controller 120 may create a cleaning map based on obstacle information and the position of the robot cleaner.

More concretely, the controller 120 may create the cleaning map or the contaminant degree map by combining the information on the obstacle detected by the obstacle detection unit 140, with the information on the position recognized by the position recognition unit 150. Alternatively, the controller 120 corrects the created cleaning map or contaminant degree map.

Referring to FIG. 5, the robot cleaner may further comprise an output unit 160 configured to display, on a screen, the contaminant degree detected by the contaminant degree detection unit, or the contaminant degree map created by the controller. The output unit 160 may output an alarm sound, an alarm screen, etc. according to an alarm signal generated from the controller 120. The output unit 160 may display, on a screen, obstacle information, position information, a cleaning region, a cleaning map, etc. The output unit 160 may further display information on the current state of each unit of the robot cleaner, the current cleaning state, etc. The output unit 160 may be implemented as one of a light emitting diode (LED), a liquid crystal display (LCD) device, a plasma display panel (PDP) and an organic light emitting diode (OLED). The output unit 160 may include means for outputting a sound, such as a beeper and a speaker.

Referring to FIG. 5, the robot cleaner may further comprise an input unit 170, a storage unit 180, a power unit 191, and a driving unit 193.

A user may directly input a control command to the robot cleaner through the input unit 170, or may input a command for instructing output of at least one information of the robot cleaner. The input unit 170 is provided with one or more input buttons. The input button may include an OK button for inputting a command for certifying detection information, obstacle information, position information, a cleaning region or a contaminant degree map and a cleaning map, and a setting button for inputting a setting command. Alternatively, the input button may include a resetting button for inputting a resetting command with respect to each information, a deletion button, a cleaning start button, a stop button, etc. The input unit 170 and the output unit 160 may be implemented as a touch screen for implementing both an input and an output.

The storage unit 180 is configured to store therein a control algorithm for driving the robot cleaner. The storage unit 180 is configured to store therein information on a contaminant degree, a contaminant degree map, and a contaminant (contamination material). The storage unit may store therein information on an obstacle detected by the obstacle detection unit 140, position information, a cleaning region, a cleaning map, etc. As the storage unit 180, a non-volatile memory is mainly used. The non-volatile memory (NVM, NVRAM) indicates a storage apparatus capable of continuously maintaining stored information even in a state of no power supply. The non-volatile memory is implemented as ROM, a flash memory, a magnetic computer memory device (e.g., a hard disc, a diskette drive and a magnetic tape), an optical disc drive, magnetic RAM, PRAM, etc.

The power unit 191 is provided with a chargeable power supply means, thereby supplying power into the robot cleaner. The power unit 191 is configured to supply power for moving the robot cleaner and performing a cleaning operation. If the remaining amount of power is not sufficient, the robot cleaner is moved to a charging plate to be supplied with a current.

The driving unit 193 is connected to a plurality of wheels including a plurality of main wheels and one or more auxiliary wheels. And, the driving unit 193 is provided with a wheel motor for rotating the wheels, and moves the robot cleaner by driving the wheel motor.

The robot cleaner may further comprise a cleaning unit (not shown). The cleaning unit includes a suction motor for sucking the air and means for collecting dust, and is configured to suck dust or foreign materials of the periphery.

Referring to FIG. 2, a remote controlling system of a robot cleaner according to one embodiment of the present disclosure comprises a robot cleaner 100 and a terminal device 200. The robot cleaner 100 searches for a region to be cleaned (cleaning region), and creates a cleaning map with respect to the cleaning region. And, the robot cleaner 100 detects a contaminant degree of the cleaning region, thereby creating a contaminant degree map from the cleaning map. The terminal device 200 receives the contaminant degree map from the robot cleaner 100, creates a control command with respect to the robot cleaner, and transmits the control command to the robot cleaner. The robot cleaner were aforementioned in FIGS. 1, 3 and 5, and thus explanations thereof will be omitted.

Referring to FIG. 4, the terminal device 200 includes a control module 210, a communication module 220 and a user interface module 230. The control module 210 is configured to create a control command by executing a remote control program. The communication module 220 is configured to receive the contaminant degree map from the robot cleaner, and transmit the control command to the robot cleaner. The user interface module 230 is configured to display the contaminant degree map, and to receive the control command. The communication module 220 may be connected to the robot cleaner 100 in one of a wired manner, a wireless manner, and a satellite communication manner. The terminal device 200 further includes a storage module 240 configured to store therein the remote control program, and data received from the robot cleaner. The terminal device 200 is connected to the robot cleaner via communication means, such as a computer, a smart television, a smart phone and a portable phone. Alternatively, the terminal device 200 may be connected to the robot cleaner or other terminal device through a connection device such as access point (AP).

The robot cleaner 100 firstly searches for a region to be cleaned (cleaning region), and creates a cleaning map. Here, the robot cleaner 100 creates a cleaning map based on information on an obstacle detected by the obstacle detection unit 140. Alternatively, the robot cleaner 100 may create a cleaning map by combing information on an obstacle detected by the obstacle detection unit 140, with information on its position recognized by the position recognition unit 150. The contaminant degree detection unit 110 is configured to detect dust, contaminants, etc. included in the air or on the bottom of a cleaning region, and calculates a contaminant degree. The controller 120 creates a contaminant degree map from the cleaning map through combination with position information. The communication unit 130 is connected to the terminal device 200, and transmits a cleaning map, a contaminant degree map, obstacle information, position information, state information, etc. to the terminal device 200. The communication unit 130 is configured to receive a control command from the terminal device.

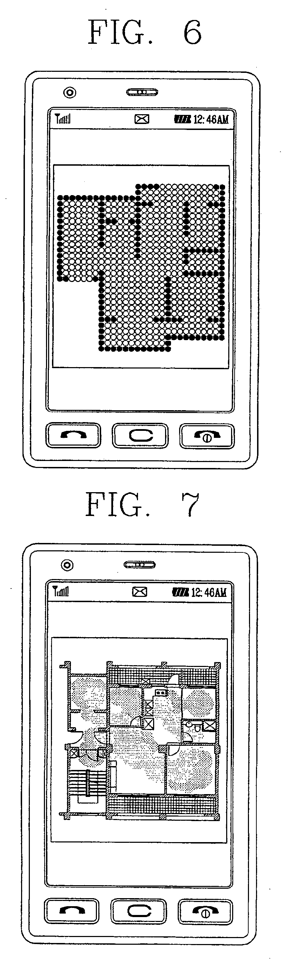

As shown in FIG. 6, the terminal device 200 may display the cleaning map received through the communication module 220, on a screen, through the user interface module 230. The control module 210 is configured to execute a remote control program, and to generate a control command for controlling the robot cleaner. The communication module 220 transmits the control command generated by the control module to the robot cleaner. The user interface module 230 is provided with a plurality of buttons for starting, ending, charging, cleaning pattern setting, etc., and receives a command for controlling the robot cleaner from a user. Once a user inputs a control command for instructing the robot cleaner to run, to clean, etc. through the user interface module 230, the communication module 220 transmits the control command to the communication unit 130. Then, the terminal device 200 displays the received contaminant degree map through the user interface module 230 as shown in FIG. 7. The terminal device may display, on the screen, a contaminant degree according to each position, a contaminant type, etc. as well as the contaminant degree map, in a numerical manner or highlighting or shading manner. The user may allows the terminal device to generate a control command with respect to the robot cleaner through the user interface module 230 by using the contaminant degree map, and to transmit the generated control command to the robot cleaner.

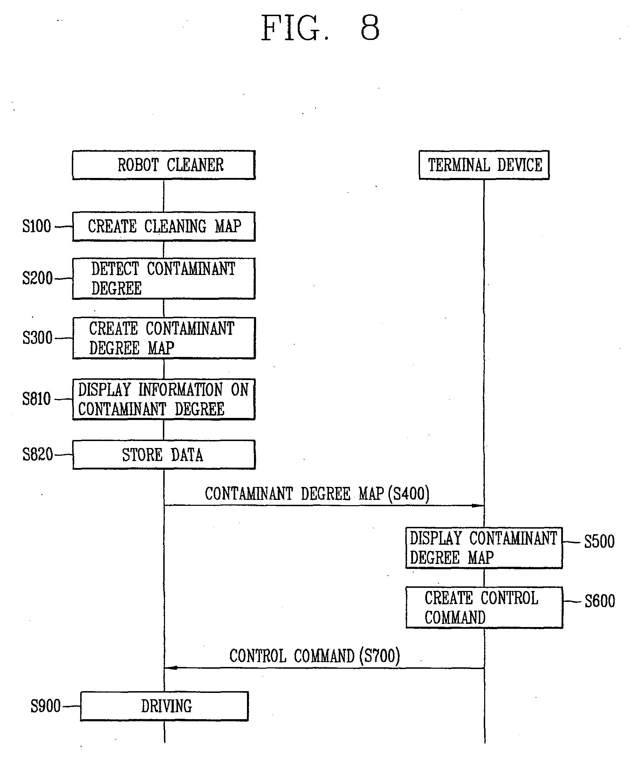

Referring to FIG. 8, a remote controlling method of a robot cleaner according to one embodiment is based on the remote controlling system of a robot cleaner, the system including a robot cleaner which performs a cleaning operation with autonomously running within a cleaning region, and a terminal device which transceives (transmits and receives) data with the robot cleaner and remote-controls the robot cleaner. The remote controlling method comprises creating a cleaning map with respect to a region to be cleaned by the robot cleaner (S100), detecting a contaminant degree of the cleaning region by the robot cleaner (S200), creating a contaminant degree map from the cleaning map based on the contaminant degree by the robot cleaner (S300), and transmitting the contaminant degree map to the terminal device by the robot cleaner (S400). Configurations of an apparatus may be understood with reference to FIGS. 1 to 5.

The robot cleaner firstly searches for a region to be cleaned, and creates a cleaning map (S100). That is, the robot cleaner creates a cleaning map based on obstacle information or position information or a combination of obstacle information and position information. Then, the robot cleaner detects a contaminant degree of dust or contaminants which exist in the air or on the bottom of the cleaning region (S200). Then, the robot cleaner creates a contaminant degree map from the cleaning map through combination with the position information (S300). Then, the robot cleaner is connected to a terminal device, and transmits to the terminal obstacle information, position information, state information, etc. (S400). And, the robot cleaner receives a control command from the terminal device.

The remote controlling method of a robot cleaner further comprises displaying the contaminant degree map on a screen by the terminal device (S500). The remote controlling method of a robot cleaner further comprises creating a control command with respect to the robot cleaner by the terminal device (S600), and transmitting the control command to the robot cleaner by the terminal device (S700). The terminal device displays a received cleaning map on the screen as shown in FIG. 6. And, the terminal device displays a received contaminant degree map on the screen as shown in FIG. 7 (S500). The terminal device may display, on the screen, a contaminant degree according to each position, a contaminant type, etc. as well as the contaminant degree map, in a numerical manner or highlighting or shading manner. The terminal device executes a remote control program for controlling the robot cleaner, and creates a control command for controlling the robot cleaner (S600). The terminal device may be provided with a plurality of buttons for starting, ending, charging, cleaning pattern setting, etc., and may receive a command for controlling the robot cleaner from a user. Once a user inputs a control command for instructing the robot cleaner to run, to clean, etc., the terminal device transmits the control command to the robot cleaner (S700). The terminal device may create a control command by driving a remote control program, and then transmit the control command to the robot cleaner.

As aforementioned, in the present disclosure, a cleaning map is created by searching for a region to be cleaned (cleaning region), and a contaminant degree map is created by detecting a contaminant and a contaminant degree according to each position within the cleaning region. A user may easily establish a cleaning schedule and a contamination prevention schedule based on the cleaning map and the contaminant degree map. Furthermore, the cleaning map and the contaminant degree map with respect to the cleaning region may be received at a remote place through the terminal device. This may allow the user to easily check information on a cleaning state, a contamination state, etc. of the cleaning region, and to control the robot cleaner based on the checked information.

## Claims

1. A remote controlling system of a robot cleaner, the system comprising:
a robot cleaner (100) configured to create a cleaning map with respect to a cleaning region to be cleaned by performing a cleaning operation for the cleaning region; and
a terminal device (200) configured to control the robot cleaner (100) by generating a control command with respect to the robot cleaner (100),
**characterized in that**:
the robot cleaner (100) is configured to create a contaminant degree map from the cleaning map by detecting a contaminant degree of the cleaning region after creating the cleaning map; and
the terminal device (200) is configured to control the robot cleaner (100) by receiving the contaminant degree map from the robot cleaner (100),
wherein the robot cleaner (100) includes:
a contaminant degree detection unit (110) configured to detect a contaminant degree and a contaminant type of a region to be cleaned;
a controller (120) configured to create the cleaning map and the contaminant degree map; and
a communication unit (130) configured to transmit the contaminant degree map to the terminal device (200), and to receive a control command from the terminal device (200),
wherein the terminal device (200) displays the contaminant degree map according to the contaminant type in highlighting or shading manner.

2. The system of claim 1, wherein the contaminant degree detection unit (110) includes an air detection sensor (111) configured to detect dust or specific materials included in the air at the periphery of the cleaning region.

3. The system of any one of claims 1 to 2, wherein the contaminant degree detection unit (110) includes a bottom detection sensor (112) configured to detect dust or specific materials on the bottom of the cleaning region.

4. The system of any one of claims 1 to 3, further comprising an obstacle detection unit (140) having one or more sensors, and configured to detect an obstacle on the cleaning region,
wherein the controller (120) is configured to create the cleaning map or the contaminant degree map based on information on the obstacle detected by the obstacle detection unit (140), or is configured to correct the created cleaning map or contaminant degree map.

5. The system of claim 4, further comprising a position recognition unit (150) having one or more sensors, and configured to recognize a position of the robot cleaner (100),
wherein the controller (120) is configured to create the cleaning map or the contaminant degree map through combination of information on the obstacle detected by the obstacle detection unit (140) and information on the position recognized by the position recognition unit (150), or is configured to correct the created cleaning map or contaminant degree map.

6. The system of any one of claims 1 to 5, further comprising an output unit (160) configured to display, on a screen, the contaminant degree detected by the contaminant degree detection unit, or the contaminant degree map created by the controller (120).

7. The system of any one of claims 1 to 6, wherein the controller (120) compares the contaminant degree with a preset reference value, and generates an alarm signal according to a comparison result.

8. The system of any one of claims 1 to 7, wherein the terminal device (200) includes:
a control module (210) configured to create the control command by executing a remote control program;
a communication module (220) configured to receive the contaminant degree map from the robot cleaner (100), and to transmit the control command to the robot cleaner (100); and
a user interface module (230) configured to display the contaminant degree map, and to receive the control command.

9. The system of claim 8, wherein the terminal device (200) further includes a storage module (240) configured to store therein the remote control program, and data received from the robot cleaner.

10. A remote controlling method of a robot cleaner (100) in a remote controlling system of a robot cleaner including a robot cleaner (100) which performs a cleaning operation with autonomously running within a cleaning region, and a terminal device (200) which transmits and receives data with the robot cleaner (100), and remote-controls the robot cleaner (100), the method comprising:
creating a cleaning map with respect to the cleaning region by the robot cleaner (100); and
controlling the robot cleaner (100) by generating a control command with respect to the robot cleaner (100) by the terminal device (200);
**characterized in that** it comprises the steps of:
detecting a contaminant degree and a contaminant type of of the cleaning region after creating the cleaning map by the robot cleaner (100);
creating a contaminant degree map from the cleaning map based on the contaminant degree by the robot cleaner (100);
transmitting the contaminant degree map to the terminal device (200) by the robot cleaner (100); and
displaying the contaminant degree map according to the contaminant type in highlighting and shading manner on a screen by the terminal device (200).

## Patentansprüche

1. Fernbedienungssystem eines Reinigungsroboters, wobei das System aufweist:
einen Reinigungsroboter (100), der konfiguriert ist, um eine Reinigungskarte in Bezug auf einen. Reinigungsbereich zu erzeugen, der gereinigt werden soll, indem ein Reinigungsbetrieb für den Reinigungsbereich durchgeführt wird; und
eine Endgerätvorrichtung (200), die konfiguriert ist, um den Reinigungsroboter (100) zu bedienen, indem ein Bedienbefehl in Bezug auf den Reinigungsroboter (100) erzeugt wird,
**dadurch gekennzeichnet, dass**
der Reinigungsroboter (100) konfiguriert ist, um aus der Reinigungskarte eine Verschmutzungsgradkarte zu erzeugen, indem nach dem Erzeugen der Reinigungskarte ein Verschmutzungsgrad des Reinigungsbereichs erfasst wird; und
die Endgerätvorrichtung (200) konfiguriert ist, um den Reinigungsroboter (100) zu bedienen, indem sie die Verschmutzungsgradkarte von dem Reinigungsroboter (100) empfängt,
wobei der Reinigungsroboter (100) umfasst:
eine Verschmutzungsgrad-Erfassungseinheit (110), die konfiguriert ist, um einen Verschmutzungsgrad und eine Verschmutzungsart eines Bereichs, der gereinigt werden soll, zu erfassen;
eine Steuerung (120), die konfiguriert ist, um die Reinigungskraft und die Verschmutzungsgradkarte zu erzeugen; und
eine Kommunikationseinheit (130), die konfiguriert ist, um die Verschmutzungsgradkarte an die Endgerätvorrichtung (200) zu übertragen und einen Bedienbefehl von der Endgerätvorrichtung (200) zu empfangen,
wobei die Endgerätvorrichtung (200) die Verschmutzungsgradkarte gemäß der Verschmutzungsart in einer hervorgehobenen oder verdunkelten Weise anzeigt.

2. System nach Anspruch 1, wobei die Verschmutzungsgrad-Erfassungseinheit (110) einen Lufterfassungssensor (111) umfasst, der konfiguriert ist, um Staub oder spezifische Materialien, die in der Luft an dem Umfeld des Reinigungsbereichs enthalten sind, zu erfassen.

3. System nach Anspruch 1 oder 2, wobei die Verschmutzungsgrad-Erfassungseinheit (110) einen Bodenerfassungssensor (112) umfasst, um Staub oder spezifische Materialien auf dem Boden des Reinigungsbereichs zu erfassen.

4. System nach einem der Ansprüche 1 bis 3, das ferner eine Hinderniserfassungseinheit (140) mit einem oder mehreren Sensoren aufweist, die konfiguriert ist, um ein Hindernis auf dem Reinigungsbereich zu erfassen,
wobei die Steuerung (120) konfiguriert ist, um die Reinigungskarte oder die Verschmutzungsgradkarte basierend auf Informationen über das Hindernis, das von der Hinderniserfassungseinheit (140) erfasst wird, zu erzeugen, oder konfiguriert ist, um die erzeugte Reinigungskarte oder Verschmutzungsgradkarte zu korrigieren.

5. System nach Anspruch 4, das ferner eine Positionserkennungseinheit (150) mit einem oder mehreren Sensoren umfasst, die konfiguriert ist, um eine Position des Reinigungsroboters (100) zu erkennen,
wobei die Steuerung (120) konfiguriert ist, um die Reinigungskarte oder die Verschmutzungsgradkarte durch eine Kombination von Informationen über das Hindernis, das von der Hinderniserfassungseinheit (140) erfasst wird, und Informationen, die von der Positionserkennungseinheit (150) erkannt werden, zu erzeugen, oder konfiguriert ist, um die erzeugte Reinigungskarte oder Verschmutzungsgradkarte zu korrigieren.

6. System nach einem der Ansprüche 1 bis 5, das ferner eine Ausgabeeinheit (160) aufweist, die konfiguriert ist, um auf einem Bildschirm den Verschmutzungsgrad, der von der Verschmutzungsgrad-Erfassungseinheit erfasst wird, oder die Verschmutzungsgradkarte, die von der Steuerung (120) erzeugt wird, anzuzeigen.

7. System nach einem der Ansprüche 1 bis 6, wobei die Steuerung (120) den Verschmutzungsgrad mit einem vorher festgelegten Referenzwert vergleicht und entsprechend einem Vergleichsbeispiel ein Alarmsignal erzeugt.

8. System nach einem der Ansprüche 1 bis 7, wobei die Endgerätvorrichtung (200) umfasst:
ein Bedienmodul (210), das konfiguriert ist, um den Bedienbefehl durch Ausführen eines Fernbedienprogramms zu erzeugen;
ein Kommunikationsmodul (220), das konfiguriert ist, um die Verschmutzungsgradkarte von dem Reinigungsroboter (100) zu empfangen und den Bedienbefehl an den Reinigungsroboter (100) zu übertragen; und
ein Benutzerschnittstellenmodul (230), das konfiguriert ist, um die Verschmutzungsgradkarte anzuzeigen und den Bedienbefehl zu empfangen.

9. System nach Anspruch 8, wobei die Endgerätvorrichtung (200) ferner ein Speichermodul (240) umfasst, das konfiguriert ist, um das Fernsteuerprogramm und von dem Reinigungsroboter empfangene Daten zu speichern.

10. Fernbedienungsverfahren eines Reinigungsroboters (100) in einem Fernbedienungssystem eines Reinigungsroboters (100), das umfasst: einen Reinigungsroboter (100), der einen Reinigungsbetrieb durchführt, wobei er selbständig innerhalb eines Reinigungsbereichs läuft, und eine Endgerätvorrichtung (200), die Daten an den Reinigungsroboter (100) sendet und von ihm empfängt und den Reinigungsroboter (100) fernbedient, wobei das Verfahren aufweist:
Erzeugen einer Reinigungskarte in Bezug auf den Reinigungsbereich durch den Reinigungsroboter (100); und
Bedienen des Reinigungsroboters (100) durch Erzeugen eines Bedienbefehls in Bezug auf den Reinigungsroboter (100) durch die Endgerätvorrichtung (200);
**dadurch gekennzeichnet, dass** es die folgenden Schritte aufweist:
Erfassen eines Verschmutzungsgrads und einer Verschmutzungsart des Reinigungsbereichs nach dem Erzeugen der Reinigungskarte durch den Reinigungsroboter (100);
Erzeugen einer Verschmutzungsgradkarte aus der Reinigungskarte basierend auf dem Verschmutzungsgrad durch den Reinigungsroboter (100);
Übertragen der Verschmutzungsgradkarte an die Endgerätvorrichtung (200) durch den Reinigungsroboter (100); und
Anzeigen der Verschmutzungsgradkarte gemäß der Verschmutzungsart in einer hervorgehobenen oder verdunkelten Weise durch die Endgerätvorrichtung (200).

## Revendications

1. Système de commande à distance d'un robot nettoyeur, le système comprenant :
un robot nettoyeur (100) configuré pour créer une cartographie de nettoyage en ce qui concerne une région de nettoyage à nettoyer en effectuant une opération de nettoyage pour la région de nettoyage ; et
un dispositif terminal (200) configuré pour commander le robot nettoyeur (100) en générant une instruction de commande en ce qui concerne le robot nettoyeur (100),
**caractérisé en ce que**:
le robot nettoyeur (100) est configuré pour créer une cartographie de degré de contamination à partir de la cartographie de nettoyage en détectant un degré de contamination de la région de nettoyage après la création de la cartographie de nettoyage ; et
le dispositif terminal (200) est configuré pour commander le robot nettoyeur (100) en recevant la cartographie de degré de contamination en provenance du robot nettoyeur (100),
dans lequel le robot nettoyeur (100) inclut:
une unité de détection de degré de contamination (110) configurée pour détecter un degré de contamination et un type de contamination d'une région à nettoyer;
un organe de commande (120) configuré pour créer la cartographie de nettoyage et la cartographie de degré de contamination ; et
une unité de communication (130) configurée pour transmettre la cartographie de degré de contamination au dispositif terminal (200) et pour recevoir une instruction de commande en provenance du dispositif terminal (200),
dans lequel le dispositif terminal (200) affiche la cartographie de degré de contamination en fonction du type de contamination d'une manière en surbrillance ou en nuance.

2. Système selon la revendication 1, dans lequel l'unité de détection de degré de contamination (110) inclut un capteur de détection d'air (111) configuré pour détecter de la poussière ou des matières spécifiques incluses dans l'air à la périphérie de la région de nettoyage.

3. Système selon l'une quelconque des revendications 1 et 2, dans lequel l'unité de détection de degré de contamination (110) inclut un capteur de détection de fond (112) configuré pour détecter de la poussière ou des matières spécifiques au fond de la région de nettoyage.

4. Système selon l'une quelconque des revendications 1 à 3, comprenant en outre une unité de détection d'obstacle (140) comportant un ou plusieurs capteurs, et configurée pour détecter un obstacle dans la région de nettoyage,
dans lequel l'organe de commande (120) est configuré pour créer la cartographie de nettoyage ou la cartographie de degré de contamination sur la base d'informations sur l'obstacle détecté par l'unité de détection d'obstacle (140), ou est configuré pour corriger la cartographie de nettoyage créée ou la cartographie de degré de contamination créé.

5. Système selon la revendication 4, comprenant en outre une unité de reconnaissance de position (150) comportant un ou plusieurs capteurs, et configurée pour reconnaître une position du robot nettoyeur (100),
dans lequel l'organe de commande (120) est configuré pour créer la cartographie de nettoyage ou la cartographie de degré de contamination par combinaison d'informations sur l'obstacle détecté par l'unité de détection d'obstacle (140) et d'informations sur la position reconnue par l'unité de reconnaissance de position (150), ou est configuré pour corriger la cartographie de nettoyage créée ou la cartographie de degré de contamination créée.

6. Système selon l'une quelconque des revendications 1 à 5, comprenant en outre une unité de sortie (160) configurée pour afficher, sur un écran, le degré de contamination détecté par l'unité de détection de degré de contamination, ou la cartographie de degré de contamination créée par l'organe de commande (120).

7. Système selon l'une quelconque des revendications 1 à 6, dans lequel l'organe de commande (120) compare le degré de contamination à une valeur de référence préréglée et génère un signal d'alarme en fonction d'un résultat de comparaison.

8. Système selon l'une quelconque des revendications 1 à 7, dans lequel le dispositif terminal (200) inclut :
un module de commande (210) configuré pour créer l'instruction de commande en exécutant un programme de commande à distance ;
un module de communication (220) configuré pour recevoir la cartographie de degré de communication en provenance du robot nettoyeur (100), et pour transmettre l'instruction de commande au robot nettoyeur (100) ; et
un module d'interface utilisateur (230) configuré pour afficher la cartographie de degré de contamination et pour recevoir l'instruction de commande.

9. Système selon la revendication 8, dans lequel le dispositif terminal (200) inclut en outre un module de mémorisation (240) configuré pour mémoriser dans celui-ci le programme de commande à distance et les données reçues du robot nettoyeur.

10. Procédé de commande à distance d'un robot nettoyeur (100) dans un système de commande à distance d'un robot nettoyeur incluant un robot nettoyeur (100) qui effectue une opération de nettoyage en fonctionnement autonome à l'intérieur d'une région de nettoyage, et un dispositif terminal (200) qui transmet et reçoit des données avec le robot nettoyeur (100) et commande à distance le robot nettoyeur (100), le procédé comprenant :
la création d'une cartographie de nettoyage en ce qui concerne la région de nettoyage par le robot nettoyeur (100) ; et
la commande du robot nettoyeur (100) en générant une instruction de commande en ce qui concerne le robot nettoyeur (100) par le dispositif terminal (200);
**caractérisé en ce qu'**il comprend les étapes de:
la détection d'un degré de contamination et d'un type de contamination de la région de nettoyage après la création de la cartographie de nettoyage par le robot nettoyeur (100) ;
la création d'une cartographie de degré de contamination à partir de la cartographie de nettoyage sur la base du degré de contamination par le robot nettoyeur (100);
la transmission de la cartographie de degré de contamination par le robot nettoyeur (100) au dispositif terminal (200) ; et
l'affichage de la cartographie de degré de contamination en fonction du type de contamination d'une manière en surbrillance ou en nuance sur un écran par le dispositif terminal (200).
